# EUROPÄISCHE PATENTSCHRIFT

(11) **EP 2 587 165 B1**
(45) Veröffentlichungstag und Bekanntmachung des Hinweises auf die Patenterteilung: **10.12.2014**
(21) Anmeldenummer: 12189546.0
(22) Anmeldetag: 23.10.2012
(51) Int. Cl.: F24C 15/10, G01K 11/14, H05B 3/74, H05B 6/12

(54) **Kochvorrichtung mit optischer Temperaturanzeige**
Cooking appliance with optical temperature indication
Dispositif de cuisson avec indicateur optique de température

(30) Priorität: 24.10.2011 DE 102011085112
(43) Veröffentlichungstag der Anmeldung: 01.05.2013
(73) Patentinhaber: E.G.O. Elektro-Gerätebau GmbH, 75038 Oberderdingen (DE)
(72) Erfinder: Thimm, Dr. Wolfgang, 76137 Karlsruhe (DE)
(74) Vertreter: Patentanwälte Ruff, Wilhelm, Beier, Dauster & Partner

(56) Entgegenhaltungen:
- WO-A1-2011/117470
- DE-A1-102005 025 896
- US-A- 3 781 523
- US-A- 5 499 597

## Beschreibung

### Anwendungsgebiet

Die Erfindung betrifft eine Kochvorrichtung mit optischer Temperaturanzeige. Insbesondere dient diese optische Temperaturanzeige als sogenannte Heißanzeige oder Restwärmeanzeige für eine Kochfeldplatte der Kochvorrichtung als an sich bekannter Schutz gegen Verbrennen.

Aus der deutschen Patentanmeldung DE 102011085117 ist es bekannt, thermochrome Farbe bzw. thermochromes Material unter einer Kochfeldplatte anzuordnen auf einem Träger, beispielsweise auf der Oberseite einer Induktionsheizeinrichtung, die von unten an die Kochfeldplatte angedrückt wird. Eine Umschlagtemperatur der thermochromen Farbe ist so gewählt, dass eine beispielsweise deutlich erkennbare Farbe als optische Anzeige sichtbar ist oberhalb einer Umschlagtemperatur der Anzeige, die einer Temperatur an der Kochfeldplatte entspricht, die für eine Bedienperson als gefährlich angesehen wird. So erfolgt ein Warnhinweis an die Bedienperson. Unterhalb der gefährlichen Temperatur an der Kochfeldplatte verschwindet dieser Warnhinweis wieder. Insgesamt kann somit eine optische Anzeigevorrichtung für Temperatur bzw. eine Heißanzeige geschaffen werden, die zuverlässig und ausreichend genau funktioniert und die keine aufwendige Ansteuerung oder Energieversorgung benötigt. Es lässt sich damit aber noch nicht jegliche Praxisanwendung ausreichend gut realisieren.

Die WO 2011/117470 A1 beschreibt eine Temperaturanzeige mit thermochromem Material zur Anordnung an Kochgefäßen. Das thermochrome Material weist Wismutoxid auf.

Aus der DE 102005025896 A1 ist es bekannt, optische Temperaturanzeigen mit thermochromem Material an einem Kochfeld vorzusehen.

Diese ermöglichen es einer Bedienperson, eine gefährliche Temperatur am Kochfeld zu erkennen. Des Weiteren können derartige thermochrome Schichten mit Transmissions-Sensoren abgefragt werden zur Temperaturbestimmung aufgrund einer temperaturabhängigen Farbänderung.

Aus der US 3781523 A ist es bekannt, an einer Kochplatte für ein Kochfeld thermochromes Material vorzusehen. Damit kann eine Heißanzeige für eine Restwärme an der Kochplatte realisiert werden.

Aus der US 5499597 A ist es bekannt, reversible bzw. veränderbare Temperaturanzeigen mit thermochromem Material zu schaffen, die eben eine reversible Temperaturanzeige ermöglichen. Das thermochrome Material ist dabei in eine Emaille-Schicht eingebettet zum Schutz. Es kann beispielsweise Cadmiumsulfid sein.

### Aufgabe und Lösung

Der Erfindung liegt die Aufgabe zugrunde, eine eingangs genannte Kochvorrichtung zu schaffen, mit der Probleme des Standes der Technik vermieden werden können und insbesondere auf vorteilhafte Art und Weise mit einfachem Aufbau eine optische Temperaturanzeige, insbesondere als Heißanzeige bzw. Restwärmeanzeige, möglich ist.

Gelöst wird diese Aufgabe durch eine Kochvorrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass die Kochvorrichtung eine Kochfeldplatte aufweist mit einer Heizeinrichtung darunter. Damit kann ein über der Heizeinrichtung auf die Kochfeldplatte aufgestelltes Kochgefäß samt Inhalt beheizt werden. Für die optische Temperaturanzeige ist eine optische Anzeigevorrichtung unter der Kochfeldplatte vorgesehen, die durch die Kochfeldplatte hindurch sichtbar bzw. erkennbar ist. Die Anzeigevorrichtung weist thermochromes Material auf für die Temperaturanzeige.

Erfindungsgemäß ist vorgesehen, dass das thermochrome Material im Wesentlichen aus Metalloxiden besteht, die fluoreszierend sind und als Pulver vorliegen. Ein überwiegender Anteil des Pulvers bzw. des thermochromen Materials weist eine Korngröße zwischen 10 nm und 80 nm auf, insbesondere zwischen 20 nm und 50 nm. Das Pulver bzw. thermochrome Material wird in eine Farbe oder in eine Beschichtung eingemischt, die dann wiederum mit einem geeigneten Verfahren appliziert bzw. aufgebracht wird. Die optischen Eigenschaften nach Fertigstellung werden dabei weitgehend von dem beigemischten thermochromen Material bestimmt.

Die physikalischen Eigenschaften entsprechender Materialien sind unter dem Stichwort "Quantenpunkt" bzw. "Quantendot" in den letzten 20 Jahren in der Fachwelt intensiv untersucht worden. Ebenso sind diverse Herstellungsverfahren für solche "Quantenpunkte" bzw. Materialien in den letzten Jahren intensiv untersucht worden, beispielsweise nasschemische oder lithographische Verfahren.

Somit ist es möglich, dass das thermochrome Material bei einer Umschlagtemperatur nicht nur seine Farbe und damit verbunden auch etwas seine Sichtbarkeit ändert aufgrund des veränderten Farbtons an sich, sondern diese Sichtbarkeit wird stark verändert bzw. drastisch erhöht dadurch, dass das Material eben fluoreszierend ist und vor allem so ausgewählt ist, dass es oberhalb der Umschlagtemperatur quasi von alleine leuchtet und somit auch durch übliche Kochfeldplatten von Kochfeldern in Form von eingefärbter Glaskeramik sichtbar ist. Damit ist auf alle Fälle eine sehr gute Erkennbarkeit der optischen Temperaturanzeige gegeben, insbesondere im Fall einer über der Umschlagtemperatur liegenden hohen Temperatur, bei der ja gerade gewarnt werden soll. Es wird also mit der Erfindung eine optische Anzeige geschaffen, die einer bislang üblichen Leuchtanzeige näher kommt als bislang mit thermochromen Anzeigen möglich.

Durch die geringe Größe bzw. Korngröße des Pulvers des thermochromen Materials können Quanteneffekte bzw. die Quanten-Eigenschaften dieser Materialien genutzt werden, die eben die Fluoreszenz des thermochromen Materials bewirken. Die Körner des Pulvers des Materials verhalten sich dann nicht mehr klassisch, sondern als Quantenteilchen mit vorgegebener Energielücke. Sie haben einen wesentlichen Vorteil dahingehend, dass sie bei energetischer Anregung Licht mit einer scharfen Wellenlänge emittieren können und somit sichtbar sind. Wesentlich hierfür ist eben eine enge Korngrößenverteilung in dem genannten Bereich.

Vorteilhaft ist bei der Erfindung vorgesehen, dass mindestens 50 % des thermochromen Materials in der genannten Größenordnung zwischen 10 nm und 80 nm liegen. Insbesondere sind dies mindestens 75 %, vorzugsweise sogar mehr als 90 %, also der ganz überwiegende Anteil. Noch bessere Effekte lassen sich erzielen, wenn dieser genannte hohe Anteil des thermochromen Materials in Korngrößen zwischen 20 nm und 50 nm vorliegt, also noch enger beieinander liegt.

Mindestens 90 % des thermochromen Materials mit seiner kleinen Korngröße kann bevorzugt in einem Bereich von +/- 10 % des durchschnittlichen Korndurchmessers liegen. Durch eine derart enge Korngrößenverteilung lassen sich die genannten Effekte sehr gut erzeugen bzw. ausnutzen.

Als thermochrome Materialien kommen viele Materialien in Frage, die fluoreszierende thermochrome Effekte aufweisen können. Vorteilhafte Materialien weisen eine Cadmium-Basis auf, beispielsweise CdSe oder CdS.

In weiterer Ausgestaltung der Erfindung ist es vorteilhaft möglich, an sich ähnlich wie bei der eingangs genannten deutschen Patentanmeldung DE 102011085117, das thermochrome Material bzw. die vorgenannte Farbe oder Beschichtung unterhalb der Kochfeldplatte anzuordnen und die Kochfeldplatte dabei nicht-transparent auszubilden. Dies bedeutet nicht, dass sie lichtundurchlässig sein sollte, sondern lediglich nicht vollständig transparent sein muss. Ist die Kochfeldplatte doch transparent, so funktioniert eine Anzeige gemäß der Erfindung natürlich umso besser. Die Erfindung funktioniert also auch bei einer transluzenten Kochfeldplatte. Eine Lichtdurchlässigkeit gilt natürlich vor allem bezüglich der Lichtwellenlänge des von dem fluoreszierenden thermochromen Material ausgestrahlten Lichts, kann also auch Lichtwellenlängenabhängig sein.

In einer Ausgestaltung der Erfindung kann das fluoreszierende thermochrome Material eben in Pulverform bzw. als Beimischung als Farbe oder Beschichtung auf einen Träger aufgebracht sein, insbesondere auf einen Träger aus elektrisch und/oder thermisch isolierendem Material wie Glimmer oder Keramik. Alternativ kann das thermochrome Material auch in einer Farbe oder Beschichtung auf einem Träger wie Aufklebern oder Folien aufgebracht sein, die dann wiederum an vielfältigen Einrichtungen wie Heizeinrichtungen bzw. Induktionsspulen oder Kontaktheizkörpern angebracht werden können durch einfaches Aufkleben.

Eine Aufbringungsart des thermochromen Materials kann als Fläche, als Symbol, als Buchstabe odgl. erfolgen. Ebenso ist es grundsätzlich möglich, mehrere thermochrome Materialien zu verwenden, die unter Umständen direkt nebeneinander oder auch übereinander mit einem Schichtenaufbau vorgesehen sein können. So können beispielsweise mehrere Umschlagtemperaturen erreicht werden für einen quasi zweistufigen Anzeigevorgang mit Unterscheidung zweier Temperaturen. Dies würde den Bedienkomfort bzw. Anzeigekomfort natürlich noch einmal weiter erhöhen.

In weiterer vorteilhafter Ausgestaltung der Erfindung liegt die Wellenlänge des von dem fluoreszierenden thermochromen Material ausgestrahlten Lichts zwischen 480 nm und 650 nm. Dieses Licht ist zum Einen für eine Bedienperson gut erkennbar. Zum Anderen liegt es in einem Farbbereich von üblicherweise verwendeten Einfärbungen von Kochfeldplatten, die häufig rötlich-braun eingefärbt sind, so dass eine derartige optische Temperaturanzeige auch durch derartige Kochfeldplatten hindurch besonders gut erkennbar ist.

In weiterer vorteilhafter Ausgestaltung der Erfindung wird eine optische Temperaturanzeige so ausgebildet, dass das fluoreszierende thermochrome Material in der Nähe einer Heizeinrichtung der Kochvorrichtung angeordnet ist. Besonders vorteilhaft ist es im Fall einer Induktions-Heizeinrichtung oberhalb davon bzw. zwischen dieser Induktions-Heizeinrichtung und der Kochfeldplatte angeordnet. Es kann beispielsweise als Beschichtung oder eingefärbter Aufkleber auf einer Isolierabdeckung einer solchen Induktions-Heizeinrichtung ausgebildet sein.

Vorteilhafter als bei einem Strahlungsheizkörper wird die Erfindung mit einem sogenannten Warmhalteheizkörper realisiert, der als Kontaktheizkörper wirkt und elektrische Widerstandsheizelemente aufweist und an die Unterseite der Kochfeldplatte angelegt ist. Darauf aufgestellte Kochgefäße werden dann samt Inhalt warm gehalten mit einer Temperatur von 50°C bis 80°C, so dass das Essen darin jederzeit serviert werden kann. Derartige Warmhalteheizkörper bzw. ihre elektrischen Widerstandsheizelemente erreichen bei weitem nicht so hohe Temperaturen wie Strahlungsheizkörper, sondern diese können in einem Bereich gehalten werden, der besser handhabbar ist und in dem es ausreichend stabile Materialien gibt. Auf ihre Oberseite, die eine Abdeckung oder ein Träger für das Widerstandsheizelement sein kann, zur Kochfeldplatte hin kann dann thermochromes Material aufgebracht werden wie ansonsten auch beschrieben, beispielsweise als direkte Beschichtung oder als Aufkleber. Der Träger für das Widerstandsheizelement kann keramisch sein, beispielsweise Aluminiumoxid odgl., oder aus Metall mit einer Isolierschicht bestehen.

Bei den vorbeschriebenen Widerstandsbeheizungen bzw. Dickschicht-Heizungen ist üblicherweise der elektrisch isolierende Träger zwischen Heizwiderstand und Kochfeldplatte angeordnet aus Sicherheitsgründen. Deswegen kann auf die an der Unterseite der Kochfeldplatte anliegende Seite des Trägers eine Beschichtung mit dem thermochromen Material erfolgen oder ein vorgenannter Aufkleber bzw. eine Folie mit dem thermochromen Material aufgebracht werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind den Zeichnungen schematisch dargestellt und werden im folgenden näher erläutert. In den Zeichnungen zeigen:
- Fig. 1: Eine seitliche Schnittdarstellung durch eine erste erfindungsgemäße Kochvorrichtung mit einer ringförmigen optischen Anzeigevorrichtung mit thermochromer Farbe um die Heizeinrichtung herum,
- Fig. 2: eine zweite erfindungsgemäße Kochvorrichtung mit einer Induktionsspule als Heizeinrichtung und einer flächig darauf aufgeklebten optischen Anzeigevorrichtung,
- Fig. 3: eine im heißen Zustand der Kochfeldplatte bzw. der optischen Anzeigevorrichtung entsprechend Fig. 2 darunter dargestellten Anzeige,
- Fig. 4: eine starke vergrößerte Schnittdarstellung durch die Anzeigevorrichtung gemäß Fig. 2,
- Fig. 5: eine erweiterte zweistufige Anzeige aufbauend auf Fig. 3 und
- Fig. 6: eine nochmals erweiterte Anzeige ähnlich Fig. 3.

### Detaillierte Beschreibung der Ausführungsbeispiele

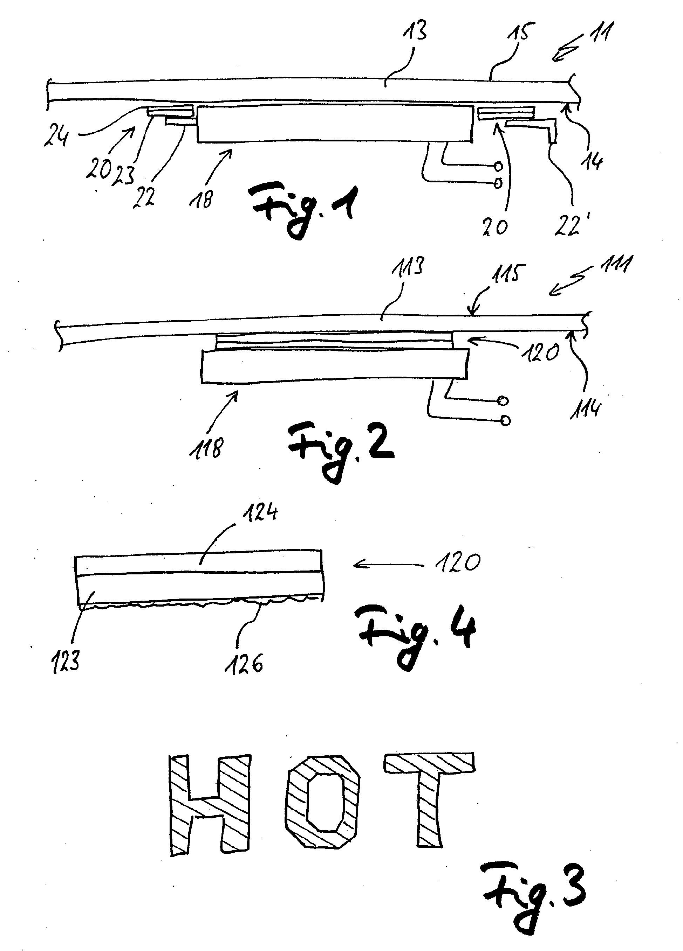

In Fig. 1 ist eine Kochvorrichtung in Form eines Kochfeldes 11 im seitlichen Schnitt dargestellt mit Kochfeldplatte 13, unter der eine Heizeinrichtung 18 angeordnet ist. Die Kochfeldplatte 13 kann eine übliche Glaskeramik-Kochfeldplatte sein mit Unterseite 14 und Oberseite 15. Sie kann vorteilhaft eingefärbt sein, beispielsweise rot-braun oder milchigweiß eingefärbt, wie dies häufig der Fall ist. Alternativ kann sie zwar im Wesentlichen durchsichtig bzw. transparent sein, zumindest oberhalb der Anzeigevorrichtung bzw. des fluoreszierenden thermochromen Materials. Dann kommt aber der Vorteil der fluoreszierenden Eigenschaften weniger deutlich zum Tragen, da ein Durchstrahlen der Kochfeldplatte 13 ohnehin leichter ist. Um transparente Bereiche herum kann die Kochfeldplatte eingefärbt oder mit Farbe beschichtet oder versehen sein als eine Art an sich bekannter Maskierung.

Die Heizeinrichtung 18 kann grundsätzlich eine für Kochfelder 11 verwendete Strahlungsheizeinrichtung oder ein Warmhalteheizkörper bzw. Kontaktheizkörper einerseits oder eine Induktionsspule für eine Induktionsbeheizung andererseits sein. Im vorliegenden Fall spielt dies für das Ausführungsbeispiel der Fig.1 lediglich für die zu erwartenden bzw. einzustellenden Temperaturen eine Rolle.

Die Heizeinrichtung 18 ist vorteilhaft von unten an die Unterseite 14 der Kochfeldplatte 13 angedrückt, wenngleich nicht direkt daran befestigt. So kann jedoch eine definierte Position erreicht werden.

Um die Heizeinrichtung 18 herum ist eine Anzeigevorrichtung 20 in Ringform angeordnet. Sie verläuft relativ nahe an der Heizeinrichtung 18 und kann entweder einen geringen Abstand zur Unterseite 14 der Kochfeldplatte 13 aufweisen oder aber daran anliegen bzw. angedrückt sein. Eine eigentliche Befestigung der Anzeigevorrichtung 20 jedoch erfolgt über separate Befestigungsmittel. Einerseits kann hier, wie in Fig. 1 links dargestellt ist, ein Haltevorsprung 22 vorgesehen sein, auf dem die Anzeigevorrichtung 20 montiert ist, beispielsweise festgeklebt oder festgeklemmt ist. Der Haltevorsprung 22 kann an der Seite der Heizeinrichtung 18 vorgesehen sein bzw. von dieser abstehen, beispielweise als Blechlasche odgl. herausgebogen sein. Alternativ kann er als umlaufender Ring darauf geklemmt sein odgl..

Eine alternative Ausgestaltung eines Haltevorsprungs 22' ist in Fig.1 rechts dargestellt, der nicht direkt an der Heizeinrichtung 18 vorgesehen ist, sondern entweder an einer separaten Halteeinrichtung, welche möglicherweise auch die Heizeinrichtung 18 sowie weitere Heizeinrichtungen des Kochfelds festhält. Alternativ kann der Haltevorsprung 22' auch selbst unlösbar an der Unterseite 14 der Kochfeldplatte 13 festgeklebt sein und dann, beispielsweise durch Festklemmen oder Einrasten, die Anzeigevorrichtung 20 halten. Wichtig ist hier eben zum Einen die Anordnung der Anzeigevorrichtung 20 rund um die Heizeinrichtung 18 und sehr nahe daran. Zum Anderen kann die Anzeigevorrichtung 20 zwar an der Unterseite 14 der Kochfeldplatte 13 angedrückt sein, unter Umständen ist dies sogar vorteilhaft. Jedenfalls ist die Anzeigevorrichtung 20 nicht unlösbar an der Kochfeldplatte 13 befestigt, beispielsweise durch Aufkleben oder direktes Beschichten. Auf diese Art und Weise kann mit der Erfindung der Aufbau bzw. die Herstellung der Kochfeldplatte 13 einfacher gehalten werden.

Im Betrieb der Heizeinrichtung 8 ist zu unterscheiden zwischen einer Strahlungsheizeinrichtung bzw. einem Warmhalteheizkörper bzw. Kontaktheizkörper einerseits und einer Induktionsspule andererseits. Im Falle einer Strahlungsheizeinrichtung strahlt diese, beispielsweise mit glühenden Heizelementen nach Art von Wendeln odgl., nach oben durch die Kochfeldplatten 13 mit ihrer Heizleistung, welche dann über eine Unterseite eines darüber aufgestellten Topfes in diesen bzw. in das darin befindliche Gargut eingekoppelt wird. Dabei erwärmt sich die Kochfeldplatte 13 direkt durch die Strahlungsleistung und indirekt über die Topfunterseite. Dies führt dann nach Beendigung des Kochvorgangs zu dem Problem mit der hohen Temperatur der Kochfeldplatten 13 bzw. ihrer Oberseite 15 in diesem Bereich, weswegen eine Heißanzeige bzw. Restwärmeanzeige notwendig ist, um eine Bedienperson vor unbeabsichtigtem Berühren zu schützen. Ähnlich ist es bei dem Warmhalteheizkörper bzw. Kontaktheizkörper, der die Kochfeldplatte 13 sogar nur direkt erwärmt, indem er an ihr anliegt. Die erwärmte Kochfeldplatte 13 gibt ihre Wärme weiter an die Anzeige und kann dann dort bei einer bestimmten Umschlagtemperatur den eingangs genannten Farbumschlag bewirken.

Geht man von einer vorgenannten kritischen Temperatur von 50°C bis 70°C oder sogar bis 90°C für die Kochfeldplatte aus, oberhalb der eine Restwärmeanzeige aktiviert sein sollte, so kann angesichts der Wärmeübertragung von der Kochfeldplatte 13 auf die Anzeigevorrichtung 20 diese Umschlagtemperatur noch niedriger gewählt werden. Im Betrieb der Heizeinrichtung 18 in Form einer Strahlungsheizeinrichtung wird zwar die Anzeigevorrichtung 20 auf eine erheblich höhere Temperatur aufgeheizt, in der Praxis auf 150°C bis 250 °C. Dies stört aber nicht, weil dann die Umschlagtemperatur überschritten ist und der Farbumschlag an der fluoreszierenden thermochromen Farbe erfolgt. Im Wesentlichen geht es hier ja auch um das Unterschreiten der Umschlagtemperatur mit der Folge, dass dann eine optische Anzeige wieder verschwindet bzw. sie eben bis zum Erreichen der Umschlagtemperatur, also bei höheren Temperaturen, vorhanden sein sollte. Deswegen kann hier beispielsweise eine Umschlagtemperatur von 35°C bis 60°C ausreichen, insbesondere auch in dem Fall, dass die Anzeigevorrichtung 20 an die Unterseite 14 der Kochfeldplatte 13 direkt angelegt ist und somit ein sehr guter Wärmeübergang mit sehr ähnlichen Temperaturen gegeben ist. Bei der Wahl der Umschlagtemperatur der thermochromen Farbe muss natürlich auch berücksichtigt werden, dass die Kochfeldplatte 13 im zentralen Bereich über der Heizeinrichtung 18 sehr wahrscheinlich noch wärmer ist als in den Randbereichen nahe der Anzeigevorrichtung 20.

Die Anzeigevorrichtung 20 besteht aus einem Träger 23, beispielsweise aus temperaturbeständigem Kunststoff oder anderen Materialien wie Mikanit oder Keramik. Darauf aufgebracht ist fluoreszierendes thermochromes Material als Farbe 24 bzw. als Pulver in die Farbe 24 beigemischt. Die thermochrome Farbe 24 kann bei einer Temperatur an der Anzeigevorrichtung 20 oberhalb der Umschlagtemperatur von einer unauffälligen Farbe, beispielsweise einer dunklen Farbe wie Blau, zu der fluoreszierenden auffälligen Farbe wie Rot umschlagen, was dann als gut sichtbare Anzeige bzw. Restwärmeanzeige dient. Somit wird durch den Farbumschlag bei Temperaturen über der Umschlagtemperatur die optische Restwärmeanzeige durch die umgeschlagene fluoreszierende thermochrome Farbe selbst gebildet.

Im Falle einer Induktionsheizeinrichtung als Heizeinrichtung 18 kann diese die Anzeigevorrichtung 20 nur in geringem Maß direkt erwärmen, beispielsweise aufgrund von Spulenverlusten. Eine induktive Erwärmung eines entsprechend erwärmbaren Trägers 23 der Anzeigevorrichtung 20 ist abzulehnen, insbesondere auch deswegen, weil sie dann ja wiederum von der Temperatur der Kochfeldplatte 13 selbst unabhängig ist. Insofern wird in diesem Fall die Anzeigevorrichtung 20 mit der fluoreszierenden thermochromen Farbe 24 nur, wie zuvor eigentlich auch schon beschrieben, von der Rückwärme der Kochfeldplatte 13 selbst erwärmt. Dabei erwärmt die Induktionsheizeinrichtung die Kochfeldplatte 13 nicht direkt, sie wird lediglich durch die Rückwärme der direkt erwärmten Topfunterseite warm und somit weniger stark bzw. vor allen weniger schnell.

Eine alternative Ausgestaltung eines Kochfelds 111 gemäß Fig. 2 weist als Heizeinrichtung 118 eine Induktionsheizeinrichtung auf. Diese Induktionsheizeinrichtung 118 ist an ihrer Oberseite mit einer Anzeigevorrichtung 120 versehen und mit dieser an einer Unterseite 114 einer Kochfeldplatte 113 angedrückt. Ein Andrücken der Induktionsheizung 118 kann auf übliche Art und Weise erfolgen, beispielsweise indem sie sowie weitere Induktionsheizeinrichtungen des Kochfelds 111 auf einer üblichen, hier nicht dargestellten Trägerplatte montiert ist und diese wiederum an außen am Rand angebrachten Halterungen an der Kochfeldplatte 113 gehaltert ist. Alternativ zu einer Induktionsheizeinrichtung kann es auch allgemein ein vorgenannter Warmhalteheizkörper bzw. Kontaktheizkörper sein, der auch üblicherweise an die Unterseite des Kochfelds 111 angedrückt wird. Er kann einen Träger aufweisen, an dem, unter Umständen mit einer Isolationsschicht dazwischen bei einem metallischen Träger aus Blech odgl., ein elektrisches Widerstandsheizelement vorgesehen ist, wobei der Träger in Fig. 4 oben liegt und direkt an die Unterseite 114 des Kochfelds 111 gedrückt ist zur Wärmeübertragung. Eine Anzeigevorrichtung 120 wäre dann auf der Oberseite des Trägers angeordnet, während an seiner Unterseite das Widerstandsheizelement vorgesehen ist.

Die großflächige Anzeigevorrichtung 120 auf der Oberseite der Induktionsheizeinrichtung 118 ist somit direkt an die Unterseite 114 der kochfeldplatte 113 angedrückt, aber wiederum nicht direkt daran befestigt bzw. aufgeklebt oder sonstwie lösbar befestigt. Der genaue Aufbau der Anzeigevorrichtung 120 ist aus Fig. 4 zu ersehen. Eine Trägerfolie 123 weist an ihrer Unterseite eine Klebeschicht 126 auf, mittels derer sie auf die Oberseite der Induktionsheizeinrichtung 118 aufgeklebt ist. Die Trägerfolie 123 kann dabei beispielsweise auch eine sogenannte Kapton-Folie sein oder eine sonstige Isolierfolie oder Isolierscheibe, wie sie üblicherweise auf die Oberseiten von Induktionsheizeinrichtungen gelegt wird zum Andrücken an die Unterseite von Kochfeldplatten.

Oben auf der Trägerfolie 123 befindet sich eine Farbschicht 128, beispielsweise eine zuvor bereits beschriebene thermochromen Farbe, die kalt vorteilhaft einen dunklen Farbton wie Dunkelrot aufweist. Sie kann entweder großflächig vorgesehen sein, im wesentlichen so groß wie die Anzeigevorrichtung 120, oder aber nur Symbolform aufweisen, beispielsweise gemäß Fig. 3 die Buchstaben "H O T". Sie weist in diesem Fall derartige Eigenschaften auf, dass sie unterhalb einer Umschlagtemperatur eben dunkel ist, und so durch die Kochfeldplatte 113 hindurch nicht erkennbar ist als solche. Oberhalb der Umschlagtemperatur wird die fluoreszierende thermochrome Farbe 124 dann eben leuchtend farbig, beispielsweise Leuchtrot, und sichtbar in Form des Symbols bzw. der Schrift gemäß Fig. 3. So dient sie als Restwärmeanzeige.

Der Vorteil der Anordnung gemäß Fig. 2 der Anzeigevorrichtung 120 direkt oben auf der Heizeinrichtung 118 liegt darin, dass üblicherweise derartige Induktionsheizeinrichtungen mit Induktionsspulen ohnehin eine Isolierfolie auf der Oberseite aufweisen, beispielsweise eine vorgenannte Kapton-Folie, alternativ eine Isolierscheibe. Es werden also keine weiteren Bauteile benötigt, sondern eben nur etwas anders ausgebildete. Diese weisen dann beim Beispiel der Isolierfolie bzw. Isolierscheibe eine Bedruckung oder einen Aufkleber auf, je nach Kundenwunsch und Anwendungsfall bzw. Baureihe.

Ein weiterer Vorteil liegt darin, dass dann eine großflächige Restwärmeanzeige erreicht werden kann, was mit der ringförmigen Ausgestaltung bei der Fig. 1 weniger gut möglich ist.

Schließlich kann davon ausgegangen werden, dass die maximale Restwärme an der Kochfeldplatte 113 im zentralen Bereich mittig über der Heizeinrichtung vorhanden ist, und somit eine optische Restwärmeanzeige auch dieses berücksichtigen sollte. Dies kann zwar einerseits durch an sich bekannte Temperaturverläufe sowohl in zeitlicher Hinsicht als auch in räumlicher Hinsicht von diesem mittleren Bereich zum äußeren Randbereich über dem Außenrand der Heizeinrichtung 118 erfolgen. Dennoch ist eine diesen mittleren Bereich direkt erfassende Restwärmeanzeige genauer. Auch dies spricht für diese Ausgestaltung.

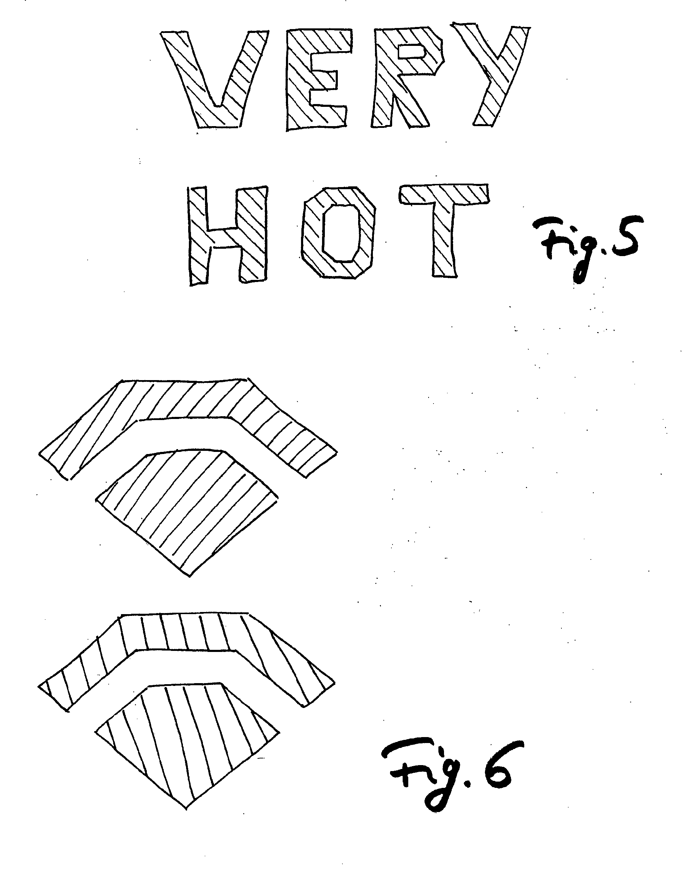

Alternativ zu der konkreten Ausgestaltung der Anzeigevorrichtung 120 mit Farbschicht 128 und thermochromer Farbe 124 darüber können auch zwei thermochrome Farben vorgesehen sein mit unterschiedlichen Umschlagtemperaturen, die also zwei verschiedene Pulver mit thermochromem Material aufweisen. Eine davon hat bei einer höheren Temperatur ihren Farbumschlag, beispielsweise entsprechend einer Temperatur oben an der Kochfeldplatte von deutlich über 100°C, wenn also eine Berührung noch sehr gefährlich ist. Der andere Farbumschlag kann bei einer Temperatur erfolgen, welche einer Temperatur an der Kochfeldplatte von etwa 50°C bis 70°C entspricht, also dem üblichen Wert für Restwärmeanzeigen, unterhalb derer eine Berührung der Kochfeldplatte nicht mehr die Gefahr von Verbrennungen bedeutet. Diese beiden thermochromen Farben können nebeneinander vorgesehen sein. Die eine mit der niedrigeren Umschlagtemperatur stellt entsprechend Fig. 5 unten das Wort "H O T" dar. Die fluoreszierende thermochrome Farbe mit der höheren Umschlagtemperatur kann entsprechend "V E R Y" in kräftiger Farbe darstellen. Bei sehr heißer Kochfeldplatte wird dann von der Anzeigevorrichtung 120 "VERY HOT" angezeigt, und bei etwas niedrigeren Temperaturen, die aber immer noch über der Grenztemperatur von 50°C bis 70°C liegen, nur "H O T" entsprechend Fig. 3.

Fig. 6 zeigt, dass anstelle Schrift auch ein Logo dargestellt werden kann. In Fig. 6 oben ist im kalten Zustand dargestellt, wie die thermochrome Farbschicht einen bestimmten unauffälligen Farbton aufweist, beispielsweise Dunkelblau. Im über die Grenztemperatur von 50°C bis 70°C erwärmten Zustand ändert sich der Farbton in der Darstellung darunter und wird beispielsweise leuchtend blau. Dies kann sowohl als Temperaturanzeige zu Warnzwecken genutzt werden als auch als temperaturabhängige Betriebsanzeige, so dass im erwärmten Zustand das Logo beispielsweise des Geräteherstellers leuchtend und auch durch eine eingefärbte Kochfeldplatte hindurch gut erkennbar erscheint.

## Patentansprüche

1. Kochvorrichtung mit optischer Temperaturanzeige, wobei die Kochvorrichtung eine Kochfeldplatte aufweist mit einer Heizeinrichtung darunter zum Beheizen eines darüber auf die Kochfeldplatte aufgestellten Kochgefäßes, wobei eine optische Anzeigevorrichtung für Temperatur unter der Kochfeldplatte vorgesehen ist, wobei die Anzeigevorrichtung thermochromes Material zur optischen Anzeige aufweist, wobei das thermochrome Material im Wesentlichen aus Metalloxiden besteht, **dadurch gekennzeichnet, dass** die Metalloxide fluoreszierend sind und als Pulver vorliegen mit einem überwiegenden Anteil von Korngrößen zwischen 10 nm und 80 nm, wobei das Pulver bzw. thermochrome Material in eine Farbe oder in eine Beschichtung eingemischt wird, die dann mit einem geeigneten Verfahren appliziert bzw. aufgebracht wird.

2. Kochvorrichtung nach Anspruch 1, **dadurch gekennzeichnet, dass** mindestens 50 % des thermochromen Materials in der Größenordnung zwischen 10 nm und 80 nm liegt.

3. Kochvorrichtung nach Anspruch 2, **dadurch gekennzeichnet, dass** mindestens 75 % des thermochromen Materials in der Größenordnung zwischen 10 nm und 80 nm liegt, vorzugsweise mehr als 90 %.

4. Kochvorrichtung nach einem der vorhergehenden Ansprüche, **dadurch gekennzeichnet, dass** mindestens 90 % des thermochromen Materials mit kleinen Korngrößen in einem Bereich von +/- 10 % des durchschnittlichen Korndurchmessers liegen.

5. Kochvorrichtung nach einem der vorhergehenden Ansprüche, **dadurch gekennzeichnet, dass** das thermochrome Material eine Cd-Basis aufweist, insbesondere CdSe oder CdS ist.

6. Kochvorrichtung nach einem der vorhergehenden Ansprüche, **dadurch gekennzeichnet, dass** das thermochrome Material unterhalb der Kochfeldplatte angeordnet ist.

7. Kochvorrichtung nach Anspruch 6, **dadurch gekennzeichnet, dass** die Kochfeldplatte nicht-transparent ist, aber lichtdurchlässig für die Lichtwellenlänge des von dem fluoreszierenden thermochromen Material ausgestrahlten Lichts.

8. Kochvorrichtung nach einem der vorhergehenden Ansprüche, **dadurch gekennzeichnet, dass** das thermochrome Material als Farbe oder Beschichtung auf einen Träger aufgebracht ist.

9. Kochvorrichtung nach Anspruch 8, **dadurch gekennzeichnet, dass** der Träger aus isolierendem Material wie Glimmer oder Keramik besteht.

10. Kochvorrichtung nach einem der vorhergehenden Ansprüche, **dadurch gekennzeichnet, dass** eine Umschlagtemperatur für einen Farbumschlag des thermochromen Materials bei etwa 50°C bis 90°C liegt.

11. Kochvorrichtung nach einem der vorhergehende Ansprüche, **dadurch gekennzeichnet, dass** die Wellenlänge des von dem fluoreszierenden thermochromen Material ausgestrahlten Lichts zwischen 480 nm und 650 nm liegt.

12. Kochvorrichtung nach einem der vorhergehenden Ansprüche, **dadurch gekennzeichnet, dass** das fluoreszierende thermochrome Material in der Nähe einer Heizeinrichtung der Kochvorrichtung angeordnet ist.

13. Kochvorrichtung nach Anspruch 12, **dadurch gekennzeichnet, dass** das fluoreszierende thermochrome Material im Falle einer Induktions-Heizeinrichtung oberhalb davon bzw. zwischen der Induktions-Heizeinrichtung und der Kochfeldplatte angeordnet ist.

14. Kochvorrichtung nach einem der vorhergehenden Ansprüche, **dadurch gekennzeichnet, dass** das fluoreszierende thermochrome Material die physikalischen Eigenschaften von Quantenpunkten bzw. Quantendots aufweist.

## Claims

1. A cooking appliance having an optical temperature indicator, wherein said cooking appliance includes a cooktop plate having a heating device arranged underneath for heating a cooking vessel being positioned above on said cooktop plate, wherein an optical indicator device for temperature is provided below said cooktop plate, wherein said indicator device includes a thermochrome material for optical indication, wherein said thermochrome material essentially consists of metal oxides,
**characterized in that**
the metal oxides are fluorescent and present as a powder with a major part of powder grains having a particle size between 10 nm and 80 nm, wherein the powder or thermochrome material is admixed to a paint or a coating, which is then applied or deposited using an appropriate method.

2. The cooking appliance according to claim 1, **characterized in that** at least 50 % of said thermochrome material have a particle size in the order between 10 nm and 80 nm.

3. The cooking appliance according to claim 2, **characterized in that** at least 75 % of said thermochrome material have a particle size in the order between 10 nm and 80 nm, preferably more than 90 %.

4. The cooking appliance according to any one of the preceding claims, **characterized in that** at least 90 % of said thermochrome material having a small particle size are within a range of +/- 10 % of an average grain diameter.

5. The cooking appliance according to any one of the preceding claims, **characterized in that** said thermochrome material is based on cadmium (Cd), in particular is CdSe or CdS.

6. The cooking appliance according to any one of the preceding claims, **characterized in that** said thermochrome material is arranged underneath said cooktop plate.

7. The cooking appliance according to claim 6, **characterized in that** said cooktop plate is non-transparent, but light-transmissive for a light wavelength of the light emitted by the fluorescent thermochrome material.

8. The cooking appliance according to any one of the preceding claims, **characterized in that** said thermochrome material is applied on a carrier as a paint or coating.

9. The cooking appliance according to claim 8, **characterized in that** said carrier consists of an insulating material such as mica or ceramics.

10. The cooking appliance according to any one of the preceding claims, **characterized in that** a change temperature for a color change of said thermochrome material is in a range of approximately 50 °C to 90 °C.

11. The cooking appliance according to any one of the preceding claims, **characterized in that** a wavelength of the light emitted by said fluorescent thermochrome material is in a range between 480 nm and 650 nm.

12. The cooking appliance according to any one of the preceding claims, **characterized in that** said fluorescent thermochrome material is arranged in the vicinity of a heating device of said cooking appliance.

13. The cooking appliance according to claim 12, **characterized in that** in a case of an induction heating device, said fluorescent thermochrome material is arranged above said induction heating device or between the induction heating device and the cooktop plate.

14. The cooking appliance according to any one of the preceding claims, **characterized in that** said fluorescent thermochrome material has physical properties of quantum points or quantum dots.

## Revendications

1. Dispositif de cuisson avec indicateur optique de température, le dispositif de cuisson comprenant une plaque de plan de cuisson munie d'un appareil de chauffage en dessous pour le chauffage d'un récipient de cuisson placé au-dessus sur la plaque de plan de cuisson, un dispositif indicateur optique de température étant prévu sous la plaque de plan de cuisson, le dispositif indicateur comprenant un matériau thermochrome pour l'indicateur optique, le matériau thermochrome étant essentiellement constitué d'oxydes métalliques, **caractérisé en ce que** les oxydes métalliques sont fluorescents et se présentent sous la forme d'une poudre ayant une fraction prédominante de tailles de particule comprises entre 10 nm et 80 nm, la poudre ou le matériau thermochrome étant incorporé(e) dans une peinture ou dans un revêtement, qui est ensuite appliqué(e) par un procédé approprié.

2. Dispositif de cuisson selon la revendication 1, **caractérisé en ce qu'**au moins 50 % du matériau thermochrome se situe dans l'ordre de grandeur compris entre 10 nm et 80 nm.

3. Dispositif de cuisson selon la revendication 2, **caractérisé en ce qu'**au moins 75 % du matériau thermochrome se situe dans l'ordre de grandeur compris entre 10 nm et 80 nm, de préférence plus de 90 %.

4. Dispositif de cuisson selon l'une quelconque des revendications précédentes, **caractérisé en ce qu'**au moins 90 % du matériau thermochrome présentant des petites tailles de particules se situe dans une plage de ± 10 % du diamètre de particule moyen.

5. Dispositif de cuisson selon l'une quelconque des revendications précédentes, **caractérisé en ce que** le matériau thermochrome est à base de Cd, notamment CdSe ou CdS.

6. Dispositif de cuisson selon l'une quelconque des revendications précédentes, **caractérisé en ce que** le matériau thermochrome est agencé sous la plaque de plan de cuisson.

7. Dispositif de cuisson selon la revendication 6, **caractérisé en ce que** la plaque de plan de cuisson n'est pas transparente, mais transmet la lumière de la longueur d'onde de la lumière émise par le matériau thermochrome fluorescent.

8. Dispositif de cuisson selon l'une quelconque des revendications précédentes, **caractérisé en ce que** le matériau thermochrome est appliqué sous la forme d'une peinture ou d'un revêtement sur un support.

9. Dispositif de cuisson selon la revendication 8, **caractérisé en ce que** le support est constitué d'un matériau isolant tel que le mica ou la céramique.

10. Dispositif de cuisson selon l'une quelconque des revendications précédentes, **caractérisé en ce qu'**une température de virage pour un virage de couleur du matériau thermochrome est d'environ 50 °C à 90 °C.

11. Dispositif de cuisson selon l'une quelconque des revendications précédentes, **caractérisé en ce que** la longueur d'onde de la lumière émise par le matériau thermochrome fluorescent est comprise entre 480 nm et 650 nm.

12. Dispositif de cuisson selon l'une quelconque des revendications précédentes, **caractérisé en ce que** le matériau thermochrome fluorescent est agencé à proximité d'un appareil de chauffage du dispositif de cuisson.

13. Dispositif de cuisson selon la revendication 12, **caractérisé en ce que**, dans le cas d'un appareil de chauffage à induction, le matériau thermochrome fluorescent est agencé au-dessus de celui-ci ou entre l'appareil de chauffage à induction et la plaque de plan de cuisson.

14. Dispositif de cuisson selon l'une quelconque des revendications précédentes, **caractérisé en ce que** le matériau thermochrome fluorescent présente les propriétés physiques de points quantiques.
